# EUROPEAN PATENT SPECIFICATION

(11) **EP 1 404 756 B1**
(45) Date of publication and mention of the grant of the patent: **11.02.2009**
(21) Application number: 02740608.1
(22) Date of filing: 16.05.2002
(51) Int. Cl.: C08K 13/02, C08L 27/06

(54) **PVC STABILISERS**
PVC-STABILISATOREN
COMPOSITIONS STABILISATRICES POUR PVC

(30) Priority: 17.05.2001 IT MI20011020
(43) Date of publication of application: 07.04.2004
(73) Proprietor: Reagens S.p.A., 40016 S. Giorgio Di Piano (IT)
(72) Inventor: BERNA, Mario, I-40137 Bologna (IT); ABBATE, Orazio, I-40047 Vergato (IT)
(74) Representative: Gervasi, Gemma
(86) International application number: PCT/EP2002/005397
(87) International publication number: WO 2002/092686

(56) References cited:
- EP-A- 0 623 555
- US-A- 5 872 166
- US-A- 6 013 703
- US-A- 6 136 900

## Description

### Field of the invention

The present invention refers to a stabilising composition for halogenated polymers and in particular for PVC. The present invention especially refers to a composition of an inorganic stabiliser free from heavy metals and zinc, including--as main component--a zeolite perchlorate or a hydrotalcite perchlorate in synergetic association with metal carboxylates, organic costabilisers and organic antioxidants.

### Prior art

A great number of PVC stabilisers have been well-known for a long time. The main stabilisers are based on lead derivatives, organometallic compounds of tin, mixtures of metallic soaps and organic compounds.

Lead derivatives are largely used and include inorganic salts (e.g. lead tribasic sulphate, lead dibasic phosphite, etc.) and lead soaps, such as for example stearates, laurates, etc.

Organostannic stabilisers may be alkyl-tin mercaptides or carboxylates and are mainly used in the stabilisation of rigid PVC.

The compounds consisting of metallic soaps mixtures are based on combinations of salts of alkaline or alkaline earth metal carboxylic acids, such as for example barium-zinc or calcium-zinc derivatives; these last are a valid alternative to the conventional systems based on heavy metals and their consumption is constantly growing.

Conventional stabilising systems include perchlorates in the various forms known, e.g. supported on materials, such as zeolites, calcium silicate, hydrotalcites, or bound to hydrotalcites through a chemical reaction.

Perchlorates are especially used in PVC stabilisers for car's interior, where PVC is in contact with polyurethanes. The presence of perchlorates brings about an excellent thermal stability and, obviously, slows down the degradation derived from the contact with amines. Examples illustrating said properties are described in JP04173854.

JP8283499 discloses that, thanks to the presence in the stabilising system of perchlorates in association with zeolites or hydrotalcites treated with perchlorates, PVC--when used in powder formulations for moulding--exhibits good gelling properties and is easily removed from the mould.

As described in JP7149979, the resistance to ageing in various conventional processes increases in the presence of a stabilising system including ammonium perchlorate in association with zeolites or hydrotalcites treated with perchlorates.

To solve explosiveness problems and provide safe handling properties, JP4050250 proposes the use of metallic perchlorates with zeolites or hydrotalcites.

EP0286887 discloses that the addition of polydihydropyridine to stabilising systems based on calcium and zinc brings about an increased stabilising efficiency.

All the aforesaid systems may contain heavy metals or zinc. That is why the present ever growing interest in stabilising systems free from heavy metals and zinc has spurred the development of new systems.

US5543449 discloses that highly stable plastified PVC can be obtained using a perchlorate and an epoxy compound, and not lead or cadmium.

US5859100 proposes uracil derivatives as fundamental components of a rigid or semirigid PVC composition essentially free from heavy metals.

### Summary of the invention

It is an object of the present invention to provide a stabilising composition free from heavy metals and zinc meeting the most recent ecological requirements.

The stabiliser composition comprises 1) zeolite perchlorate or hydrotalcite perchlorate, 2) a fatty acid salt of alkaline or alkaline earth metals, 3) an organic antioxidant and 4) an organic costabiliser. In the specific combination of the four components, the new system allows the obtainment of excellent stabilising properties in the absence of heavy metals (barium, cadmium, lead, tin) and in the absence of zinc derivatives.

Now, it has been found that rigid or semirigid PVC, stabilised by means of a mixture as the one described, exhibits an excellent thermal stability, a satisfactory initial colour, and a good colour fastness.

Additives known for polyvinylchlorides can be added to the stabiliser composition of the present invention according to the formulation known, e.g. lubricants such as paraffin, oxidised waxes, polyehylene wax, microcrystalline wax, lubricant esters.

It has surprisingly been found that the primary stabiliser, zeolite or hydrotalcite, combined with perchloric acid or perchlorates is highly effective--thanks to the particular combination of components--for maintaining a good initial colour fastness and an excellent thermal stability, also in the absence of zinc derivatives.

### Detailed description of the invention

### Zeolite perchlorate

Zeolites may be represented by general formula (I)

M _{q/a} [(AlO₂)_{q} (SiO₂)ᵣ] wH₂O (I)

where a is the M cation charge,
M is an element of the first or second main group, in particular Na, K, Mg,
q is a number equal to or greater than 2,
q:r is a number equal to or greater than 0.4, preferably ranging from 0.4 to 10.5, and
w is a number ranging from 0 to 300.

The zeolites that can be used according to the present invention are described in "Atlas of Zeolite Structure Types", W. M. Meier and D. H. Olson, Butterworths, 3rd Edition, 1992.

The zeolites whose particle size is predominantly in the range from 0.5 to 10 micron are particularly preferred.

The preferred known zeolites have a cavity of 3-5 Å in average actual diameter and can be prepared according to methods known in the art.

Particularly preferred are the zeolites of type NaA, which have a cavity of 4 Å in average actual diameter. Therefore, they are known as zeolites 4A and are represented by formula

Na₁₂ Al₁₂ Si₁₂ O₄₈·27H₂ O (zeolite A).

Particularly preferred are also the zeolites of general formula (I), known as zeolites X, represented by formula

(Na₂,Ca,Mg)₂₉ Al₅₈ Si₁₃₄ O₃₈₄·240H₂ O (zeolite X).

The zeolite compound including ion perchlorate used in the present invention is the compound obtained by contact of a zeolite of the type represented in formula (I) with perchloric acid or, in particular, with metallic perchlorate, where M belongs to the group consisting of alkaline or alkaline earth metals, M=Na, K, Mg being particularly preferred.

Particularly preferred are the zeolite perchlorates whose particle size is predominantly in the range from 0.5 to 10 micron.

### Hydrotalcite perchlorate

Hydrotalcite-type compounds are generally represented by formula (II)

Mg ₁₋ₓAlₓ(OH)₂ (CO₃)_{x/2} ·mH₂O (II)

where m is a positive number and x is a number satisfying the equation 0<x ≤0.5.

The hydrotalcite compound with ion perchlorate utilised in the present invention is the compound obtained through an exchange reaction of the ion carbonate of a hydrotalcite of the type represented by formula (III)

Mg₄ Al₂(OH)₁₂ (CO₃)·mH₂O (III),

with an ion perchlorate as represented by formula (IV)

Mg₄ Al₂ (OH)₁₂ (ClO₄) ₓ(Co₃)_{1-x/2}·mH₂ O (IV)

where m =0-6 and x is a number satisfying the equation 1 <x≤ 2.

An example of said product is Alcamizer 5 (Kyowa).

### Metallic perchlorates

Out of the metallic perchlorates that may be utilised in the present invention, sodium perchlorate, potassium perchlorate, magnesium perchlorate are preferred.

The sodium perchlorate used is the one commercially available; titre: 84 to 87%. It contains crystallisation water as (NaClO₄ ·1H₂O).

The potassium perchlorate used is the one commercially available; titre: 98 to 99%.

The magnesium perchlorate used is the one commercially available; titre: 98 to 99%.

### Metallic soaps

All metallic soaps commonly used as PVC stabilisers may be utilised in the present invention. By way of example, it is possible to use salts of long-chain saturated or unsaturated fatty acids containing 12 to 22 carbon atoms, especially 14 to 18 carbon atoms, with alkaline or alkaline earth metals, salts of long-chain saturated fatty acids containing 12 to 22 carbon atoms, especially 14 to 18 carbon atoms, of which one at least is substituted with an OH group, and other salts, such as for example salts of abietic acids.

Li, Na, K, Mg, Ca salts of the aforementioned fatty acids, in particular of palmitic, stearic, lauric, oleic, hydroxystearic acids, are preferably used as metallic soaps.

### Organic costabiliser

Organic costabilisers are used to increase the stabilising system efficiency. β-Diketonic compounds and dihydropyridines or polydihydropyridines are especially used.
**1.** β-diketonic compounds. The 1,3 dicarbonyl compounds that can be used are linear or cyclic dicarbonyl compounds, preferably the dicarbonyl compounds of formula 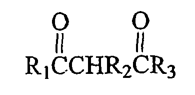 where R₁ is C₁-C₂₂ alkyl, C₅-C₁₀ hydroxyalkyl, C₃-C₇ alkenyl, phenyl, OH-, C₁-C₄ alkyl-, C₁-C₄ haloalkyl-substituted phenyl, C₇-C₁₀ phenylalkyl, C₅-C₁₂ cycloalkyl, C₁-C₄ alkyl-substituted C₅-C₁₂ cycloalkyl, R₂ is hydrogen, C₁-C₈ alkyl, C₃-C₇ alkenyl, C₂-C₁₂ phenyl, C₇-C₁₂ alkylphenyl, C₇-C₁₀ phenylalkyl, R₃ has the same meaning as R₁.
   Dibenzoylmethane, stearoylbenzoylmethane and dehydroacetic acid are particularly preferred.
**2.** Dihydropyridine (DHP) or polydihydropyridine (polyDHP). The monomeric dihydropyridine derivatives that may be advantageously used are carboxyl acid esters of general formula 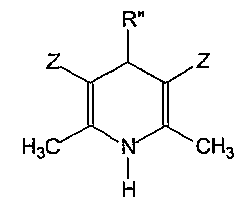
where Z is CO₂C₂H₅, CO₂(n-C₁₂H₂₅), R" is hydrogen or C₁-C₁₈ alkyl or C₂-C₁₈ alkoxycarbonyl or C₆-C₁₀ aryl. 3-Bisdodecylexycarbonyl-2,6-dimethyl-1,4-dihydropyridine, available under the trademark Stavinor D507 from Atochem, is particularly preferred.

Suitable polydihydropyridines are especially the compounds of formula 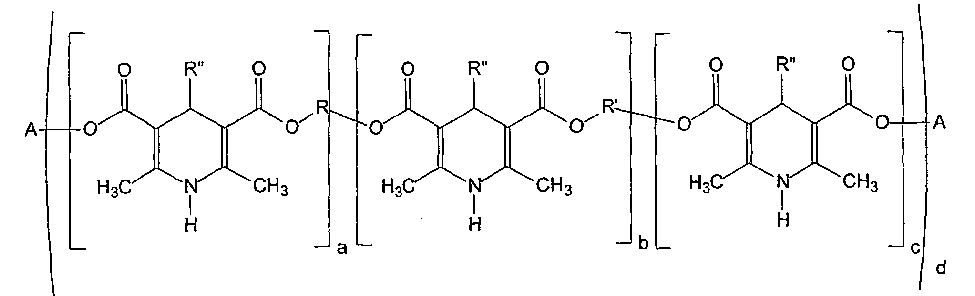 where A is non-substituted C₁-C₂₂ alkyl or C₁-C₂₂ alkyl substituted with C₁-C₁₈ alkoxy, C₁-C₁₈ alkylthio, hydroxy, acryloyloxy, meta-acryloyloxy, halogen, phenyl,
a and b are numbers from 0 to 20,
c is 0 or 1,
d is a number from 1 to 6 and conditions d(a+b+c)>1 and a+b>0 are respected,
R and R' are each methylene or phenylene or an akylene of type

(-CₚH₂ₚ X-)ₜCₚH₂ₚ-,

p is a number from 2 to 18,
t is a number from 0 to 10,
X is oxygen or sulphur,
R" is hydrogen or C₁-C₁₈ alkyl or C₂-C₁₈ alkoxycarbonyl or C₆-C₁₀ aryl. Particularly preferred is thiodiethylene-bis[5-methoxycarbonyl-2,6-dimethyl-1,4-dihydropyridine-3-carboxylate] available under the trademark Synesal M from Lagor.

### Organic antioxidant

The organic antioxidants used in the present invention are selected among the ones already known as additives for plastic materials. A synergetic effect with the aforementioned components is exhibited by the antioxidants, whose valid examples belong to the following classes:
**1.** Alkylidenebisphenols, e.g. 2,2'-methylene-bis(6-ter-butyl-4-methylphenol), 2,2'-methylene-bis(6-ter-butyl-4-ethylphenol), 2,2'-methylene-bis[4-methyl-6-(α-methylcyclohexyl)phenol], 2,2'-methylene-bis(4-methyl-6-cyclohexylphenol), 2,2'-methylene-bis(6-nonyl-4-methylphenol), 2,2'-methylene-bis(4,6-di-ter-butylphenol), 2,2'-ethylidene-bis(4,6-di-ter-butylphenol), 2,2'-ethylidene-bis(6-ter-butyl-4-isobutylphenol), 2,2'-methylene-bis[6-(α-methylbenzyl)-4-nonylphenol], 2,2'-methylene-bis[6-(α,α-dimethylbenzyl)-4-nonylphenol], 4,4'-methylene-bis(2,6-di-ter-butylphenol), 4,4'-methylene-bis(6-ter-butyl-2-methylphenol), 1,1-bis(5-ter-butyl-4-hydroxy-2-methylphenyl)butane, 2,6-bis(3-ter-butyl-5-metyl-2-hydroxybenzyl)-4-methylphenol, 1,1,3-tris(5-ter-butyl-4-hydroxy-2-methylphenyl)butane, 1,1-bis(5-ter-butyl-4-hydroxy-2-methylphenyl)-3-n-dodecylmercaptobutane, ethylene glycol bis[3,3-bis(3'-ter-butyl-4'-hydroxyphenyl)butyrate], bis(3-ter-butyl-4-hydroxy-5-methylphenyl)dicyclopentadiene, bis[2-(3'-ter-butyl-2'-hydroxy-5'-methylbenzyl)-6-ter-butyl-4-metyl-phenyl]terephthalate, 1,1-bis(3,5-dimethyl-2-hydroxyphenyl)butane, 2,2-bis(3,5-di-ter-butyl-4-hydroxyphenyl)propane, 2,2-bis(4-hydroxyphenyl)propane, 2,2-bis(5-ter-butyl-4-hydroxy-2-methylphenyl)-4-n-dodecylmercaptobutane, 1,1,5,5-tetra-(5-ter-butyl-4-hydroxy-2-methylphenyl)pentane.
**2.** Esters of β-(3,5-di-ter-butyl-4-hydroxyphenyl)propionic acid with mono- or polyalcohols, e.g. methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, dipentaerythritol, tris(hydroxyethyl) isocyanurate, N,N'-bis(hydroxyethyl)oxalamide, 3-thioundecanol, 3-thiopentadecanol, trimethylhexanediol, trimethylolpropane, ditrimethylolpropane, 4-hydroxymethyl-1-phospha-2,6,7-trioxabicyclo-[2.2.2]-octane.
**3.** Esters of β-(5-ter-butyl-4-hydroxy-3-methylphenyl)propionic acid with mono- or polyalcohols, e.g. methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, dipentaerythritol, tris(hydroxyethyl) isocyanurate, N,N'-bis(hydroxyethyl)oxalamide, 3-thioundecanol, 3-thiopentadecanol, trimethylhexanediol, trimethylolpropane, 4-hydroxymethyl-1-phospha-2,6,7-trioxabicyclo-[2.2.2]-octane.
**4.** Esters β-(3,5-dicyclohexyl-4-hydroxypheyl)propionic acid with mono- or polyalcohols, e.g. methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxalamide, 3-thioundecanol, trimethylolpropane, 4-hydroxymethyl-1-phospha-2,6,7-trioxabicyclo-[2.2.2]-octane. Particularly preferred are 2,2'-methylene-bis(6-ter-butyl-4-methylphenol), available under the trademark Lowinox 22 M46 from Great Lakes Chem. Corp., and the esters of β-(3,5-di-ter-butyl-4-hydroxyphenyl)propionic acid with octadecanol and with pentaerythritol, available under the trademark Arenox A76 and Arenox A10, respectively, from Reagens.

### Composition

The typical composition of the stabilising system of the present invention comprises zeolite perchlorate or hydrotalcite perchlorate as main component: the composition is generally comprises 0.3 to 2.0 parts by wt. zeolite perchlorate or hydrotalcite perchlorate, preferably 0.5 to 1.2 parts by wt.; 0.1 to 1 parts by wt. metallic soap, preferably 0.2 to 0.4 parts by wt.; 0.03 to 0.3 parts by wt. organic costabiliser, preferably 0.05 to 0.15 parts by wt.; 0.03 to 0.3 parts by wt. organic antioxidant, preferably 0.05 to 0.15 parts by wt., in respect of 100 parts by wt. PVC. The absence or an inadequate quantity of one component causes an insufficient performance of the stabiliser, the initial colour and the long-term thermal stability being worse. Mixtures having the composition shown in Table 1 were prepared by homogeneously mixing the components. The mixtures were subjected to calendering, which gave the results reported in the examples.

**Table 1**

| **Mixtures composition** | |
|---|---|
| **PVC evipol SH6530¹** | **100** |
| Calcium carbonate² | 2 |
| Lubricant mix³ | 1.4 |
| Stabiliser | (⁴) |

| | |
|---|---|
| **Remarks:** ¹supplied by EVC ²Omya 90T ³paraffinic wax 0.4 microcrystalline wax 0.6 stearic acid 0.4 ⁴as shown in tables 2, 4 | |

### Examples

### Static stability tests

With the samples listed in Table 2 (examples: series s) and in Table 4 (comparative examples: series z and c), mixtures with the composition as per Table 1 were prepared.

**Table 2**

| Stabiliser chemical composition expressed as parts by wt. /100 parts PVC | | | | | | | | | | | | | |
|---|---|---|---|---|---|---|---|---|---|---|---|---|---|
| | s1 | s2 | s3 | s4 | s5 | s6 | s7 | s8 | s9 | s10 | s11 | s12 | s13 |
| Zeolite perchlorate | 0,9 | | | | 0,9 | 0,9 | 0,9 | 0,9 | 0,9 | 0,9 | | 0,9 | 0,9 |
| Hydrotalcite perchlorate¹ | | 0,9 | 0,9 | 0,9 | | | | | | | 0,9 | | |
| Ca Stearate | 0,3 | 0,3 | | | | | 0,3 | | 0,3 | 0,3 | 0,3 | | |
| Mg Stearate | | | 0,3 | | 0,3 | | | 0,3 | | | | | 0,3 |
| Li Stearate | | | | 0,3 | | 0,3 | | | | | | | |
| K Stearate | | | | | | | | | | | | 0,3 | |
| Dehydroacetic acid | 0,1 | 0,1 | 0,1 | 0,1 | | 0,1 | | 0,1 | 0,1 | | | | |
| Dibenzoylmethane | | | | | 0,1 | | | | | | | | |
| Stearoylbenzoylmethane | | | | | | | 0,1 | | | | | | |
| Synesal M³ | | | | | | | | | | 0,1 | 0,1 | 0,1 | 0,1 |
| Arenox A10 | 0,1 | 0,1 | 0,1 | 0,1 | 0,1 | 0,1 | 0,1 | | | 0,1 | 0,1 | 0,1 | |
| Arenox A76 | | | | | | | | 0,1 | | | | | 0,1 |
| Lowinox 22 M46² | | | | | | | | | 0,1 | | | | |

| | | | | | | | | | | | | | |
|---|---|---|---|---|---|---|---|---|---|---|---|---|---|
| Remarks:¹ Alcamizer 5 supplied by Kyowa ²supplied by Great Lakes Chem. Corp. ³supplied by Lagor | | | | | | | | | | | | | |

The mixtures were allowed to gel in a calender at 190°C for 5 minutes. Rectangular samples (1x1.5 cm) were cut from each sheet (0.5 mm thick). The samples were placed onto slides and heated in an air circulated oven at 190°C. At regular intervals of 15 min, the samples were withdrawn and the colour variation degree was determined visually. Each estimation was performed according to a standard by the following criterion: 1 = white,....10 = black (entirely degraded). Intermediate points take into account colour variations, if any, in the yellow, red and green range, caused by partial degradation. The longer the delay in colour variation towards the black, the lower the initial colour variation from the white, the faster is the colour, the better is the stabiliser.

The results obtained from the static stability test shown in Table 3 indicate that the stabiliser has excellent properties of colour fastness and stability.

**Table 3**

| Static thermal stability at 190°C | | | | | | | | | | | | | |
|---|---|---|---|---|---|---|---|---|---|---|---|---|---|
| | s1 | s2 | s3 | s4 | s5 | s6 | s7 | s8 | s9 | s10 | s11 | s12 | s13 |
| time 0 | 2 | 2 | 2 | 2 | 2 | 2 | 2 | 2 | 2 | 2 | 3 | 2 | 3 |
| after 15 min | 3 | 3 | 3 | 3 | 3 | 2 | 3 | 3 | 3 | 3 | 3 | 4 | 3 |
| after 30 min | 4 | 3 | 3 | 3 | 4 | 3 | 3 | 4 | 4 | 4 | 5 | 5 | 5 |
| after 45 min | 4 | 4 | 3 | 4 | 5 | 4 | 4 | 5 | 5 | 4 | 7 | 6 | 6 |
| after 60 min | 5 | 4 | 3 | 4 | 6 | 5 | 5 | 6 | 5 | 7 | 8 | 7 | 7 |
| after 75 min | 6 | 5 | 6 | 5 | 7 | 6 | 6 | 7 | 6 | 8 | 9 | 7 | 9 |
| after 90 min | 7 | 6 | 9 | 6 | 8 | 6 | 7 | 8 | 7 | 8 | 9 | 8 | 9 |
| after 105 min | 7 | 7 | 10 | 7 | 9 | 7 | 7 | 9 | 8 | 9 | 9 | 8 | 9 |
| after 120 min | 8 | 7 | | 7 | 9 | 7 | 8 | 9 | 8 | 9 | 10 | 8 | 9 |
| after 135 min | 8 | 8 | | 8 | 9 | 7 | 8 | 9 | 8 | 9 | | 8 | |

A comparison of the new stabilising system with the samples having the composition shown in Table 4

**Table 4**

| Stabiliser chemical composition expressed as parts by wt./100 parts PVC | | | | | | | | | |
|---|---|---|---|---|---|---|---|---|---|
| | z1 | z2 | z3 | c1 | c2 | c3 | c4 | c5 | c6 |
| Zeolite A | | | | 0,9 | | | | | |
| Zeolite perchlorate | 0,9 | | 0,9 | | | | 0,9 | 0,9 | 0,9 |
| Hydrotalcite¹ | | | | | 0,9 | | | | |
| Hydrotalcite perchlorate² | | 0,9 | | | | | | | |
| Ca Stearate | 0,3 | 0,3 | 0,3 | 0,3 | 0,3 | 0,3 | | 0,3 | 0,3 |
| Dehydroacetic acid | 0,1 | 0,1 | | 0,1 | 0,1 | 0,1 | 0,1 | | 0,1 |
| Synesal M ³ | | | 0,1 | | | | | | |
| Arenox A10 | 0,1 | 0,1 | 0,1 | 0,1 | 0,1 | 0,1 | 0,1 | 0,1 | |
| Zn stearate | 0,3 | 0,3 | 0,3 | | | | | | |

| | | | | | | | | | |
|---|---|---|---|---|---|---|---|---|---|
| Remakrs:¹Alcamizer 1 supplied by Kyowa ²Alcamizer 5 supplied by Kyowa ³ supplied by Lagor | | | | | | | | | |

shows that the new stabilising system is superior to the compositions containing zinc derivatives (series z, Table 5)

**Table 5**

| Static thermal stability at 190°C | | | | | | |
|---|---|---|---|---|---|---|
| | s1 | z1 | s2 | z2 | s10 | z3 |
| time 0 | 2 | 1 | 2 | 1 | 2 | 1 |
| after 15 min | 3 | 2 | 3 | 2 | 3 | 2 |
| after 30 min | 4 | 10 | 3 | 9 | 4 | 9 |
| after 45 min | 4 | | 4 | 10 | 4 | 10 |
| after 60 min | 5 | | 4 | | 7 | |
| after 75 min | 6 | | 5 | | 8 | |
| after 90 min | 7 | | 6 | | 8 | |
| after 105 min | 7 | | 7 | | 9 | |
| after 120 min | 8 | | 7 | | 9 | |
| after 135 min | 8 | | 8 | | 9 | |

The efficiency of the primary stabiliser, object of the present invention, evidently appears from a comparison with formulations in which the main component (zeolite perchlorate or hydrotalcite perchlorate) is replaced by analogous perchlorate-free products (Table 6).

**Table 6**

| Static thermal stability at 190°C | | | | |
|---|---|---|---|---|
| | s1 | s2 | c1 | c2 |
| time 0 | 2 | 2 | 4 | 4 |
| after 15 min | 3 | 3 | 6 | 8 |
| after 30 min | 4 | 3 | 6 | 9 |
| after 45 min | 4 | 4 | 7 | 9 |
| after 60 min | 5 | 4 | 7 | 8 |
| after 75 min | 6 | 5 | 7 | 8 |
| after 90 min | 7 | 6 | 8 | 8 |
| after 105 min | 7 | 7 | 8 | 9 |
| after 120 min | 8 | 7 | 9 | 9 |
| after 135 min | 8 | 8 | 10 | 9 |

The improvement that each component effects on the stabiliser composition evidently appears from a comparison with formulations not including one of the components being a part of the stabilising system (Table 7).

**Table 7**

| Static thermal stability at 190°C | | | | | |
|---|---|---|---|---|---|
| | s1 | c3 | c4 | c5 | c6 |
| time 0 | 2 | 3 | 2 | 2 | 2 |
| after 15 min | 3 | 5 | 3 | 3 | 3 |
| after 30 min | 4 | 7 | 5 | 4 | 6 |
| after 45 min | 4 | 8 | 6 | 5 | 7 |
| after 60 min | 5 | 8 | 7 | 7 | 8 |
| after 75 min | 6 | 8 | 7 | 7 | 8 |
| after 90 min | 7 | 9 | 8 | 8 | 8 |
| after 105 min | 7 | 9 | 9 | 9 | 9 |
| after 120 min | 8 | 9 | 9 | 9 | 9 |
| after 135 min | 8 | 9 | 10 | 9 | 10 |

## Claims

1. A composition capable of conferring high thermal stability upon PVC, comprising essential ingredients:
A- or X-type zeolite perchlorate or hydrotalcite perchlorate,
a fatty acid salt of alkaline or alkaline earth metals selected from the group consisting of Li, Na, K, Mg, Ca,
an organic antioxidant selected out of the classes of alkylidenebisphenols, of esters of 3,5-dicyclohexyl-substituted hydroxyphenyl-propionic acid,
an organic costabiliser selected from the group consisting of beta-diketonic compounds of formula: 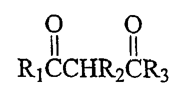
where R₁ is an alkyl, hydroxyalkyl, alkenyl, phenyl, substituted phenyl, phenylalkyl, cycloalkyl, R₂ is H, alkyl, alkenyl, phenyl, alkylphenyl, R₃ has the same meaning as R₁;
esters of dihydropyridine carboxyl acid of formula: 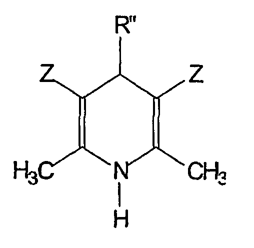 where Z is CO₂C₂H₅, CO₂(n-C₁₂H₂₅). R" is hydrogen, or C₁-C₁₈ alkyl or C₂-C₁₈ alkoxycarbonyl or C₆-C₁₀ aryl;
polydihydropyridine of formula: 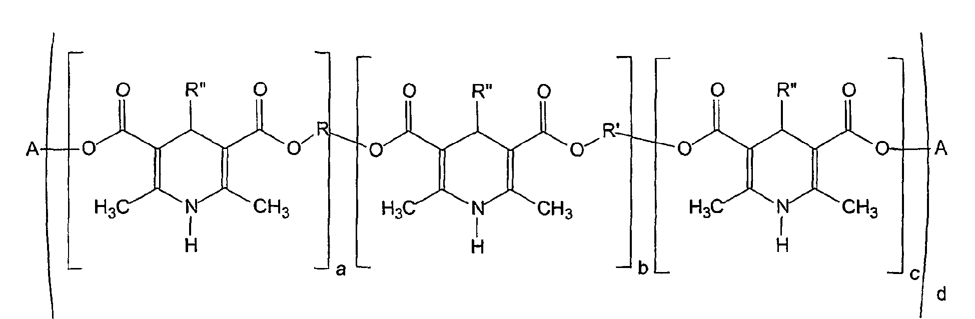 where A is non-substituted C₁-C₂₂ alkyl or C₁-C₂₂ alkyl substituted with C₁-C₁₈ alkoxy, C₁-C₁₈ alkylthio, hydroxy, acryloyloxy, meta-acryloyloxy, halogen, phenyl,
a and b are numbers from 0 to 20,
c is 0 or 1,
d is a number from 1 to 6 and conditions d(a+b+c)>1 and a+b>0 are respected,
R and R' are each methylene or phenylene or an akylene of type
(-CₚH₂ₚ- X-)ₜCₚH₂ₚ-,
p is a number from 2 to 18,
t is a number from 0 to 10,
X is oxygen or sulphur,
R" is hydrogen or C₁-C₁₈ alkyl or C₂-C₁₈ alkoxycarbonyl or C₆-C₁₀ aryl.
said composition being free from heavy metals compounds and Zn.

2. The composition according to claim 1 wherein the zeolite prechlorate contains Na, K, Mg and Ca as cations and has a cavity of 3 to 5 Å in average diameter (Ø).

3. The stabiliser composition according to claim 1 comprising 0.3 to 2.0 parts by wt. zeolite perchlorate or hydrotalcite perchlorate, 0.1 to 1 parts by wt. metallic soap, 0.03 to 0.3 parts by wt. organic antioxidant, in respect of 100 parts by wt. PVC.

4. The composition according to claim 1 wherein zeolite perchlorate or hydrotalcite perchlroate are obtained by treatment of the starting materials with an aqueous solution of perchloric acid or of alkaline or alkaline earth perchlorate.

5. Highly thermostable rigid or semirigid PVC comprising the stabilising composition according to claim 1.

6. The PVC according to claim 5 obtained by mixing, at 190°C in a calender, the starting polymer with the stabilising composition according to claim 1.

## Patentansprüche

1. Zusammensetzung, die dazu in der Lage ist, hohe thermische Stabilität auf PVC zu übertragen, und die die folgenden essenziellen Inhaltsstoffe umfasst:
Zeolitperchlorat vom Typ A oder X oder Hydrotalcitperchlorat,
ein Fettsäuresalz von alkalischen Metallen oder alkalischen Erdmetallen, die aus der Gruppe ausgewählt sind, welche aus Li, Na, K, Mg, Ca besteht,
ein organisches Antioxidans, das aus den Klassen ausgewählt ist, die aus Alkylidenbisphenolen, Estern von 3,5-Dicyclohexyl-substituierter Hydroxyphenyl-Propionsäure bestehen,
einem organischen Costabilisator, der aus der Gruppe ausgewählt ist, bestehend aus Beta-Diketon-Verbindungen mit der Formel: 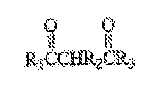
wobei R₁ ein Alkyl, Hydroxyalkyl, Alkenyl, Phenyl, substituiertes Phenyl, Phenylalkyl, Cycloalkyl ist; R₂ H, Alkyl, Alkenyl, Phenyl, Alkylphenyl ist; R₃ die gleiche Bedeutung wie R₁ hat;
Ester von Dihydropyridincarboxylsäure mit der Formel: 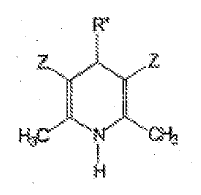 wobei Z CO₂C₂H₅, CO₂(n-C₁₂H₂₅) ist, R" Wasserstoff oder C₁-C₁₈-Alkyl oder C₂-C₁₈-Alkoxycarbonyl oder C₆-C₁₀-Aryl ist;
Polydihydropyridin mit der Formel: 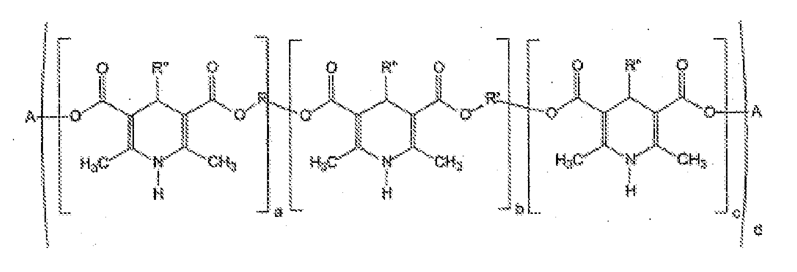 wobei A nicht-substituiertes C₁-C₂₂-Alkyl oder C₁-C₂₂-Alkyl substituiert mit C₁-C₁₈-Alkoxy, C₁-C₁₈-Alkylthio, Hydroxy, Acryloyloxy, meta-Acryloyloxy, Halogen, Phenyl ist;
a und b Zahlen von 0 bis 20 sind;
c 0 oder 1 ist;
d eine Zahl von 1 bis 6 ist und die Bedingungen d(a+b+c)>1 und a+b>0 eingehalten werden;
R und R' jeweils Methylen oder Phenylen oder ein Akylen sind vom Typ
(-C_{P}H₂ₚ-X-)ₜC_{P}H₂ₚ-;
p eine Zahl von 2 bis 18 ist;
t eine Zahl von 0 bis 10 ist;
X Sauerstoff oder Schwefel ist;
R" Wasserstoff oder C₁-C₁₈-Alkyl oder C₂-C₁₈-Alkoxycarbonyl oder C₆-C₁₀-Aryl ist, wobei die genannte Zusammensetzung keine Schwermetallverbindungen und kein Zn enthält.

2. Zusammensetzung gemäß Anspruch 1, wobei das Zeolitperchlorat Na, K, Mg und Ca als Kationen enthält und einen Hohlraum mit einem durchschnittlichen Durchmesser (Ø) von 3 bis 5 Ǻ aufweist.

3. Stabilisatorzusammensetzung gemäß Anspruch 1, welche 0,3 bis 2,0 Gewichtsanteile an Zeolitperchlorat oder Hydrotalcitperchlorat, 0,1 bis 1 Gewichtsanteil an Metallseife, 0,03 bis 0,3 Gewichtsanteile an organischem Antioxidans bezogen auf 100 Gewichtsanteile PVC enthält.

4. Zusammensetzung gemäß Anspruch 1, wobei Zeoliperchlorat oder Hydrotalcitperchlorat erhalten werden, indem das Ausgangsmaterial mit einer wässrigen Lösung aus Perchlorsäure oder Alkaliperchlorat oder Erdalkaliperchlorat gewonnen wird.

5. Stark thermostabiles festes oder halbfestes PVC, welches die stabilisierende Zusammensetzung gemäß Anspruch 1 enthält.

6. PVC gemäß Anspruch 6, welches durch Mischen des Ausgangspolymers mit der stabilisierenden Zusammensetzung gemäß Anspruch 1 bei 190 °C in einem Kalander gewonnen wird.

## Revendications

1. Composition capable de conférer une stabilité thermique élevée à du PVC, comprenant les ingrédients essentiels suivants :
du perchlorate de zéolite de type A ou X ou du perchlorate d'hydrotalcite,
un sel d'acide gras de métaux alcalins ou alcalinoterreux choisis dans le groupe constitué de Li, Na, K, Mg, Ca,
un anti-oxydant organique choisi parmi les classes des bisphénols d'alkylidène, des esters de l'acide hydroxyphényl-propionique 3,5-dicyclohexyle-substitué,
un co-stabilisateur organique choisi dans le groupe constitué des composés béta-dicétoniques de formule : 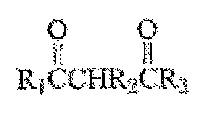
où R₁ est un alkyle, un hydroxyalkyle, un alcényle, un phényle, un phényle substitué, un phénylalkyle, un cycloalkyle, R₂ est H, un alkyle, un alcényle, un phényle, un alkylphényle, R₃ a la même signification que R₁ ;
des esters de l'acide carboxylique de dihydropyridine de formule : 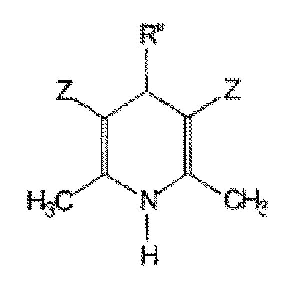 où Z est CO₂C₂H₅, CO₂ (n-C₁₂H₂₅). R" est un hydrogène, ou un alkyle en C₁-C₁₈ ou un alcoxycarbonyle en C₂-C₁₈ ou un aryle en C₆-C₁₀;
une polydihydropyridine de formule : 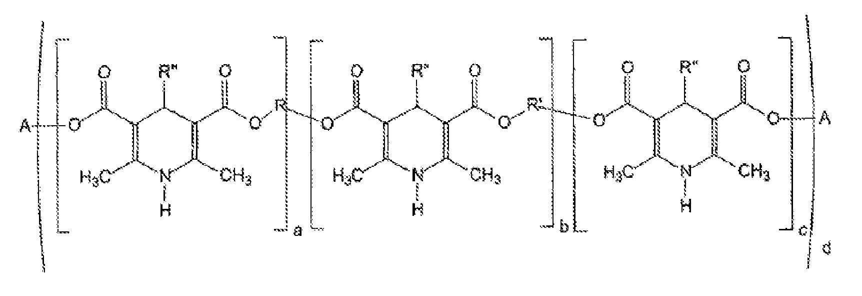 où A est un alkyle en C₁-C₂₂ non substitué ou un alkyle en C₁-C₂₂ substitué avec un alcoxy en C₁-C₁₈, un alkylthio en C₁-C₁₈, un hydroxy, un acryloyloxy, un méta-acryloyloxy, un halogène, un phényle,
a et b sont des nombres de 0 à 20,
c est 0 ou 1,
d est un nombre de 1 à 6 et les conditions d(a+b+c) > 1 et a+b > 0 sont respectées,
R et R' sont chacun un méthylène ou un phénylène ou un alkylène du type
(-CₚH₂ₚ-X-)ₜCₚH₂ₚ-,
p est un nombre de 2 à 18,
t est un nombre de 0 à 10,
X est un atome d'oxygène ou de soufre,
R" est un atome d'hydrogène ou un alkyle en C₁-C₁₈ ou un alcoxycarbonyle en C₂-C₁₈ ou un aryle en C₆-C₁₀;
ladite composition étant exempte de composés de métaux lourds et de Zn.

2. Composition selon la revendication 1, dans laquelle le perchlorate de zéolite contient Na, K, Mg et Ca comme cations et a une cavité d'un diamètre moyen (Ø) de 3 à 5 Å.

3. Composition stabilisatrice selon la revendication 1, comprenant de 0,3 à 2,0 parties en poids de perchlorate de zéolite ou de perchlorate d'hydrotalcite, de 0,1 à 1 partie en poids de savon métallique, de 0,03 à 0,3 partie en poids d'anti-oxydant organique, pour 100 parties en poids de PVC.

4. Composition selon la revendication 1, dans laquelle le perchlorate de zéolite ou le perchlorate d'hydrotalcite sont obtenus par traitement des matériaux de départ avec une solution aqueuse d'acide perchlorique ou d'un perchlorate alcalin ou alcalinoterreux.

5. PVC rigide ou semi-rigide à haute stabilité thermique comprenant la composition stabilisatrice selon la revendication 1.

6. PVC selon la revendication 5 obtenu par mélange, à 190 °C dans une calandre, du polymère de départ avec la composition stabilisatrice selon la revendication 1.
